# EUROPÄISCHE PATENTSCHRIFT

(11) **EP 0 821 087 B1**
(45) Veröffentlichungstag und Bekanntmachung des Hinweises auf die Patenterteilung: **08.03.2000**
(21) Anmeldenummer: 97111571.2
(22) Anmeldetag: 09.07.1997
(51) Int. Cl.: D01H 4/12, F16C 32/06

(54) **Offenend-Spinnvorrichtung**
Open-end spinning device
Métier à filer à bout ouvert

(30) Priorität: 27.07.1996 DE 19630477
(43) Veröffentlichungstag der Anmeldung: 28.01.1998
(73) Patentinhaber: Rieter Ingolstadt Spinnereimaschinenbau AG, 85055 Ingolstadt (DE)
(72) Erfinder: Bock, Erich, 85139 Wettstetten (DE); Knabel, Manfred, 85055 Ingolstadt (DE); Schuller, Edmund, 85055 Ingolstadt (DE)

(56) Entgegenhaltungen:
- EP-A- 0 061 016
- EP-A- 0 237 627
- EP-A- 0 435 016
- PATENT ABSTRACTS OF JAPAN vol. 011, no. 344 (M-640), 11.November 1987 & JP 62 124320 A (CANON INC), 5.Juni 1987,

## Beschreibung

Die Erfindung betrifft eine Offenend-Spinnvorrichtung mit einem Spinnrotor gemäß dem Oberbegriff des Patentanspruchs 1.

Aus der EP 0 435 016 A2 ist eine gattungsgemäße Offenend-Spinnvorrichtung bekannt, bei der der Spinnrotor in Stützscheiben gelagert wird und wo auf den Spinnrotor eine axiale Kraft über die Stützscheiben ausgeübt wird, wobei sich der Spinnrotor über seinen Schaft axial an einem aerostatischen Axiallager abstützt. Dieses besitzt eine Lagerplatte, mit der das Ende des Rotorschaftes zusammenarbeitet. Der Luftaustritt in den Lagerspalt erfolgt aus der Lagerplatte heraus, wodurch sich ein Luftpolster zwischen dem Rotorschaft und der Lagerplatte bildet. Die Lagerplatte des Axiallagers der bekannten Offenend-Spinnvorrichtung besteht aus einem permeablen Werkstoff, so daß der Luftaustritt in den Lagerspalt direkt durch die Lagerplatte hindurch erfolgt. Der Werkstoff ist dabei vorteilhaft ein Kohlenstoffwerkstoff, der durch eine Art Sintern zur Lagerplatte geformt wird. Die Lagerplatte bildet in bekannter Weise gleichzeitig eine Drosselvorrichtung für die Luft, so daß das Axiallager steif ausgebildet werden kann. Bei der bekannten Lagerung, bei der die Lagerplatte gleichzeitig auch die Drossel für die Druckluft darstellt, besteht jedoch der Nachteil, daß die Lagerplatte nicht beliebig ausgebildet werden kann, da sonst die Drosselwirkung der Lagerplatte zu groß ist und nicht genügend Luft durch die Drosselvorrichtung in den Lagerspalt gelangen kann. Dieser Nachteil könnte dadurch ausgeglichen werden, daß die Lagerplatte mit Druckluft versorgt wird, die unter sehr hohem Druck steht. Diese Druckluft ist in den meisten Fällen jedoch nicht verfügbar. Ein anderer Nachteil der bekannten Vorrichtung ist, daß bei Verwendung einer Lagerplatte, bei der die Luftdurchsatz- und Druckverhältnisse günstig sind, die Lagerplatte selbst aber durch ihre geringe axiale Ausdehnung nur eine geringe mechanische Festigkeit hat. Dies kann dazu führen, daß es im Betrieb zu einer Beschädigung oder Zerstörung des Lagers kommt. Da die Lagerplatte in eine Aufnahme eingebracht werden muß, z.B. durch Einpressen, kann eine mechanisch wenig stabile Lagerplatte auch bereits bei der Montage beschädigt oder zerstört werden. Aus dem Stand der Technik ist es bekannt, einen Teil der Lagerplatte mit einer mit dieser kombinierten Drossel zu versehen, die in einem topfartigen Hohlraum angeordnet ist. Dieser ist von der Lauffläche der Lagerplatte abgewandt angeordnet. Durch diese zusätzliche Maßnahme kann zwar die Stabilität für das Montieren der Lagerplatte erhöht werden, die Lagerplatte insgesamt wird aber wesentlich aufwendiger in der Herstellung.

Aus der EP 0 190 440 A2 ist eine gattungsgemäße Offenend-Spinnvorrichtung mit einem schaftlosen Spinnrotor bekannt, bei der sich dieser direkt an einer Lagerplatte eines aerostatischen Axiallagers abstützt. Auch hier bestehen die oben erwähnten Nachteile.

Aufgabe der vorliegenden Erfindung ist es, eine Offenend-Spinnvorrichtung mit einer Lagerplatte für eine aerostatische Axiallagerung ihres Offenend-Spinnrotors so auszubilden, daß keine zusätzliche Drosselvorrichtung erforderlich ist, die Lagerplatte einen ausreichenden Luftdurchsatz in den Lagerspalt gewährleistet und sie gleichzeitig mechanisch stabil ausgestaltet ist. Diese Aufgabe wird erfindungsgemäß mit einer Offenend-Spinnvorrichtung gemäß den Merkmalen des Patentanspruchs 1 gelöst.

Durch die erfindungsgemäße Ausgestaltung der Offenend-Spinnvorrichtung wird erreicht, daß das Axiallager einfach ausgestaltet werden kann, weil auf eine extra Drosselvorrichtung verzichtet werden kann. Die Lagerplatte selbst, die permeabel ausgestaltet ist, bildet gleichzeitig auch eine Drosselung für die Zuführung von Druckluft. Dabei wird durch die erfindungsgemäßen Luftkanäle erreicht, daß der Luftdurchtritt durch die Lagerplatte durch die Dicke des von der Luft zu durchdringenden Materials auf einfache Weise gesteuert werden kann. Dies dadurch, daß die Luftkanäle näher oder weiter weg zur Lagerfläche in der Lagerplatte enden. Gleichzeitig wird erreicht, daß die Lagerplatte selbst als kompaktes, stabiles Bauteil ausgebildet werden kann, das sowohl mechanisch widerstandsfähig ist, um von einer Aufnahme, z.B. durch Einpressen aufgenommen zu werden und gleichzeitig auch bei mechanischer Berührung durch das gelagerte Teil nicht zerstört werden kann. Durch die Wandstärke zwischen dem Ende der Luftkanäle bis hin zur Lagerfläche kann auf einfache Weise die Drosselwirkung eingestellt werden. Dadurch ist es möglich, ohne konstruktive Änderungen auch verschiedene Werkstoffe für die Lagerplatte einzusetzen. Lediglich die Tiefe der Luftkanäle bzw. deren Abstände zur Lagerfläche ermöglichen die Einstellung der Luftdurchsatzmenge für die Lagerplatte. Besondere Anforderungen an die Druckverhältnisse des Druckluftanschlusses brauchen nicht gestellt werden. Je nach Material der Lagerplatte ist es günstig, die Luftkanäle in einem Abstand von 0,5 mm bis 4 mm zur Lagerfläche enden zu lassen. Vorteilhaft finden wenigstens drei Luftkanäle Anwendung, wodurch ein gleichmäßiger Lufteintritt in den Lagerspalt gewährleistet werden kann. Besonders günstig ist es, wenn die Zahl der Luftkanäle zwischen 6 und 13 Kanälen beträgt. Bei weniger Kanälen kann es vorteilhaft sein, wenn diese sich berühren bzw. teilweise überlappen. Wichtig ist lediglich, daß im Endeffekt eine mechanische Stabilität, insbesondere quer zur Achse der Luftkanäle erreicht wird. In einer weiteren vorteilhaften Ausgestaltung der Erfindung besitzen die Luftkanäle einen Durchmesser zwischen 1,5 mm und 4 mm. Bei einem geringeren Durchmesser können mehr Kanäle in die Lagerplatte eingebracht werden, wodurch eine günstige Luftverteilung in dem Lagerspalt erreicht wird. Bei einem Durchmesser von ca. 4 mm im Luftkanal wird erreicht, daß trotz nur wenigen Bohrungen, die schnell und leicht hergestellt werden können, eine ausreichende Luftverteilung im Lager erreicht wird. Vorteilhaft besitzen die Luftkanäle eine Länge zwischen 0,5 mm und 5 mm, wodurch erreicht wird, daß über die Tiefe der Luftkanäle, bei gleichzeitig ausreichender Festigkeit der Lagerplatte, der Luftdurchsatz bzw. die Drosselwirkung der Lagerplatte gesteuert werden kann. Besonders günstig sind die Luftkanäle symmetrisch in der Lagerplatte angeordnet. Dies ist insbesondere vorteilhaft für die Luftverteilung im Lagerspalt. Besonders günstig dabei ist eine Verteilung der Luftkanäle auf einer oder mehreren Kreislinien um die Drehachse des Spinnrotors bzw. das Zentrum der Lagerfläche herum, sowie die Anordnung eines Luftkanals im Zentrum selbst.

Im folgenden wird die Erfindung anhand von zeichnerischen Darstellungen beschrieben. Es zeigen:
- **Figur 1**: eine erfindungsgemäße Offenend-Spinnvorrichtung im Schnitt;
- **Figur 2**: ein in einer Halterung angeordnetes erfindungsgemäß ausgestaltetes Axiallager;
- **Figur 3a**: eine Draufsicht auf die dem Spinnrotor abgewandte Seite der Lagerplatte von Figur 2;
- **Figur 3b**: die Seitenansicht der Lagerplatte von Figur 3a im Schnitt;
- **Figur 4a**: eine Draufsicht auf die dem Spinnrotor abgewandte Seite einer erfindungsgemäßen Lagerplatte;
- **Figur 4b**: die Seitenansicht der Lagerplatte von Figur 4a im Schnitt;
- **Figur 5a**: eine rückseitige Draufsicht auf eine Lagerplatte;
- **Figur 5b**: eine Seitenansicht der Lagerplatte von Figur 5a im Schnitt.

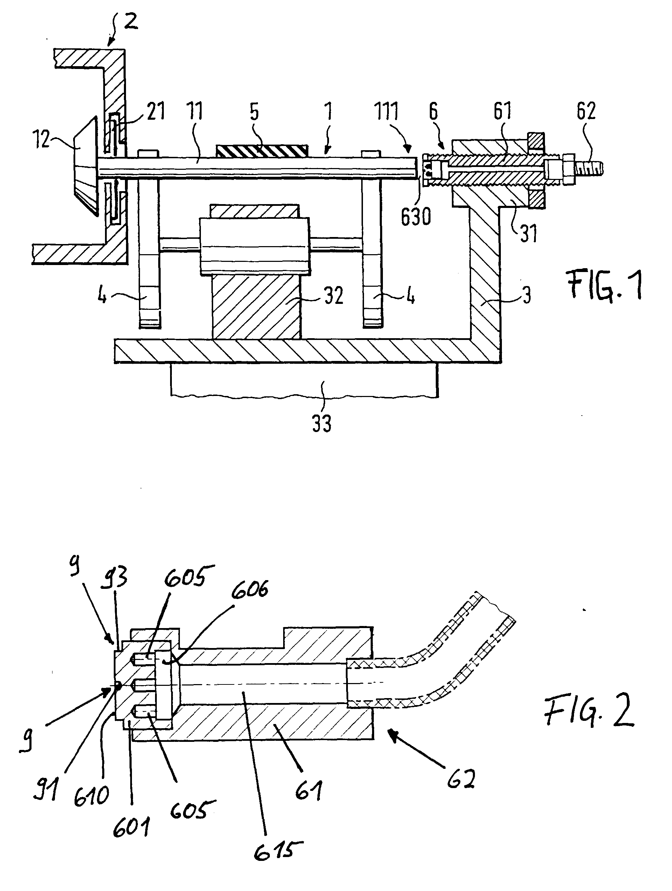

In Figur 1 ist eine erfindungsgemäß ausgestaltete Offenend-Spinnvorrichtung im Schnitt gezeigt. Beispielhaft wird dabei eine solche beschrieben, bei der der Spinnrotor über einen Schaft gelagert ist. Die wesentlichen Bestandteile einer solchen Offenend-Spinnvorrichtung sind der Spinnrotor 1 mit seinem Schaft 11 und dem Rotorteller 12, das Rotorgehäuse 2 mit der Rotorgehäusedichtung 21, der Lagerbock 3 mit der Lageraufnahme 31 für das Axiallager 6 und einer Aufnahme 32 für die Lagerung der Stützscheiben 4, die Stützscheiben 4 zur Aufnahme des Rotorschaftes, das Antriebsmittel 5, ein Tangentialriemen zum Antrieb des Spinnrotors 1 und das Axiallager 6 zur axialen Abstützung des Rotorschaftes 11.

Der Rotorschaft 11 reicht mit seinem den Rotorteller 12 tragenden Ende durch die Rotorgehäusedichtung 21 hindurch in das Rotorgehäuse 2.

Das Axiallager 6 ist in einer Halterung 61 gehalten, die bei Figur 1 als Stellschraube ausgebildet ist. Das Axiallager 6 liegt dem freien Ende 111 des Rotorschaftes 11 gegenüber. Die Lageraufnahme 31 besitzt eine Bohrung mit einem Gewinde, in das die Stellschraube axial einjustierbar eingeschraubt ist. Zur Fixierung dient eine Kontermutter. An dem dem Axiallager 6 abgewandten Ende der Stellschraube ist der Anschluß 62 für die Zuführung der Druckluft zum Axiallager 6 angeordnet. Zwischen dem Axiallager 6 und dem Schaftende 111 erstreckt sich der Lagerspalt 630. Auf gattungsgemäße Offenend-Spinnvorrichtungen wird in bekannter Weise eine axiale Kraft aufgebracht, die sich an einem Axiallager abstützt. Die axiale Kraft wird hier über den Rotorschaft durch schiefgestellte Stützscheiben 4 aufgebracht. Ebensogut ist es aber auch möglich, die axiale Kraftkomponente z.B. über einen schräg zum Rotorschaft verlaufenden Antriebsriemen oder auch eine schräggestellte Andrück- oder Treibscheibe oder auch, wie z.B. bei der Offenend-Spinnvorrichtung der EP 0 190 440 A2, über magnetische Kräfte aufzubringen. Die Offenend-Spinnvorrichtung ist auf einem Träger 33, der Teil der dazugehörigen Spinnmaschine ist, befestigt.

Figur 2 zeigt eine Halterung 61 mit einem Axiallager 6. Die Halterung ist nicht als Stellschraube, wie bei Figur 1, ausgebildet, sondern wird über nicht gezeigte Klemmittel an der Lageraufnahme befestigt. Die Lagerplatte 601 des Axiallager 6 ist für Druckluft permeabel ausgestaltet, so daß keine Bohrung notwendig sind, um Druckluft direkt in den Lagerspalt des Axiallager 6 hineinzuleiten. Damit die Luft beim Durchtritt durch die Lagerplatte nicht zu sehr gedrosselt wird, ist von der dem Schaft abgewandten Seite der Lagerplatte 601 diese mit Luftkanälen 605 versehen, so daß die Druckluft näher an die Lauffläche 610 der Lagerplatte 601 geführt wird. Die Luft muß nicht die gesamte axiale Länge der Lagerplatte 601 durchströmen. In den Lagerspalt kommt dadurch genügend Druckluft. Durch die erfindungsgemäße Ausbildung der Lagerplatte 601 mit den in axialer Richtung verlaufenden Luftkanälen 605 wird erreicht, daß auf eine Drosselvorrichtung verzichtet werden kann, wobei gleichzeitig die Lagerplatte 601 in axialer Richtung eine genügende Ausdehnung besitzt, so daß sie in die Halterung 61 hineingepreßt werden kann, ohne daß die Gefahr besteht, daß die Lagerplatte dabei beschädigt oder zerstört wird. An ihrem der Lagerplatte 601 abgewandten Ende besitzt die Halterung 61 einen Anschluß 62 für Druckluft, mit dem die Lagerplatte 601 über eine Bohrung 615 der Halterung 61 verbunden ist. Die Lagerplatte 601 besitzt zwei Verschleißanzeigen 9, von denen die eine als eine Sacklochbohrung 91 ausgestaltet ist und die andere als Ansatz 93. Bei Verschleiß der Lagerplatte 601 ist die Veränderung durch eine Wartungsperson optisch wahrnehmbar.

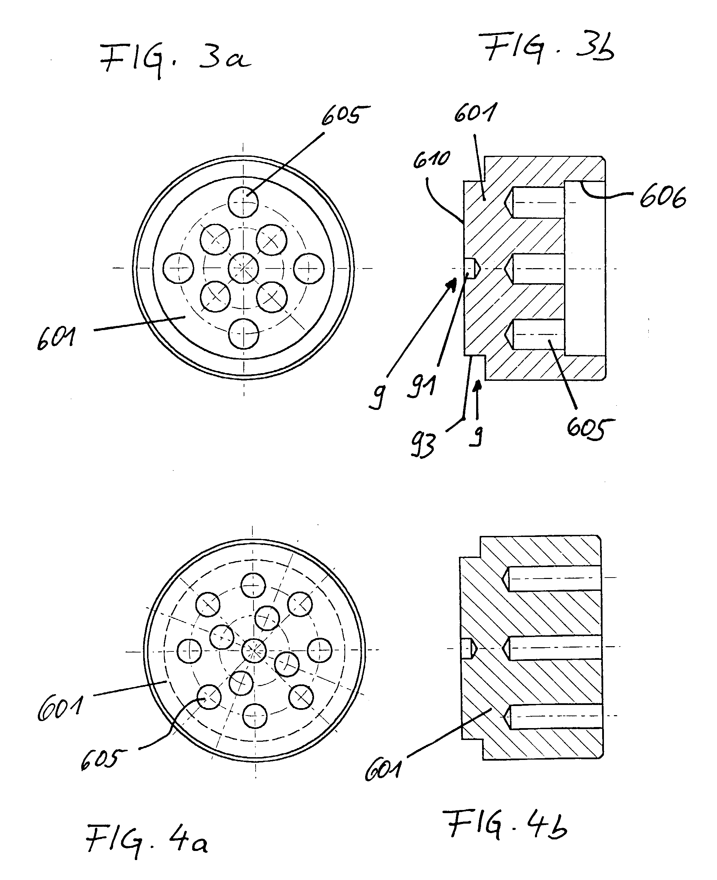

Figur 3a zeigt die Lagerplatte 601 von Figur 2 in der Draufsicht auf die der Lauffläche 610 abgewandten Seite. Die Luftkanäle 605, mit deren Hilfe die Druckluft tief in die Lagerplatte 601 eingebracht werden kann, sind in dieser Ansicht in der Draufsicht erkennbar. Im vorliegenden Fall handelt es sich um neun Bohrungen, die symmetrisch angeordnet sind, wobei jeweils vier auf einer Kreislinie in gleichem Abstand zueinander angeordnet sind. Die neunte Bohrung befindet sich im Zentrum der Lagerplatte. Durch diese Ausgestaltung kann die Lagerplatte 601 mechanisch besonders stabil ausgebildet werden. Die radiale Festigkeit der Lagerplatte 601 wird durch die Luftkanäle 605 kaum geschwächt. An ihrem von der Lauffläche 610 abgewandten Ende gehen die Luftkanäle 605 in einen gemeinsamen Luftkanal in Form einer Ausnehmung 606 der Lagerplatte 601 über.

Figur 3b zeigt die linke Seitenansicht der Lagerplatte 601 von Figur 3a im Schnitt. Die Lauffläche 610 besitzt zentrisch die Verschleißanzeige 9. Ebenso wie der Ansatz 93, der eine zweite Verschleißanzeige 9 bildet. Die Luftkanäle 605 in der Lagerplatte 601 bedingen durch ihre Tiefe den ausreichenden Luftdurchsatz durch die Lagerplatte 601. Für den Durchtritt der Druckluft durch die Lagerplatte 601 ist der Abstand zwischen dem Ende der Luftkanäle 605 und der Lagerfläche 610 maßgebend. Der um die Ausnehmung 606 befindliche ringförmige Teil der Lagerplatte 601 ist für die mechanische Festigkeit der Lagerplatte 601 dann praktisch unerheblich, wenn er im wesentlichen dazu dient, durch die längere axiale Ausdehnung die Lagerplatte leichter handhaben zu können und nicht dazu, die Lagerplatte in eine Aufnahme einzupressen.

Figur 4a zeigt ebenfalls eine Lagerplatte 601 für eine erfindungsgemäß ausgestaltete Offenend-Spinnvorrichtung, von der der Lauffläche 610 abgewandten Seite. Bei dieser sind die Luftkanäle 605 im Durchmesser kleiner ausgebildet und ihre Anzahl weit höher, als die bei Figur 3a. Die Luftkanäle sind auf zwei Kreislinien in gleichem Abstand angeordnet und einer der Luftkanäle 605 im Zentrum der Lagerplatte. Die Anzahl der Luftkanäle beträgt bei der Lagerplatte von Figur 4a 13.

Wie aus Figur 4b, die eine linke Seitenansicht von Figur 6a im Schnitt zeigt, ersichtlich, besitzt die Lagerplatte 601 keine Ausnehmung 606, wie die von Figur 3b. Die Luftkanäle 605 sind direkt vom Ende, das dem Spinnrotor abgewandt ist, in die Lagerplatte 601 eingebracht. Die hier gezeigten Luftkanäle bedingen durch ihre große Anzahl eine sehr günstige Verteilung der Druckluft im Lagerspalt. Die Herstellung ist allerdings aufwendiger. Die Luftkanäle sind beispielhaft als Bohrungen dargestellt. Die Erfindung beschränkt sich jedoch keineswegs nur darauf. Wesentlich ist die Möglichkeit der Druckluft bis dicht an die Lagerfläche zu gelangen, wobei der Luftkanal gleichzeitig insbesondere die radiale Stabilität der Lagerplatte gewährleistet.

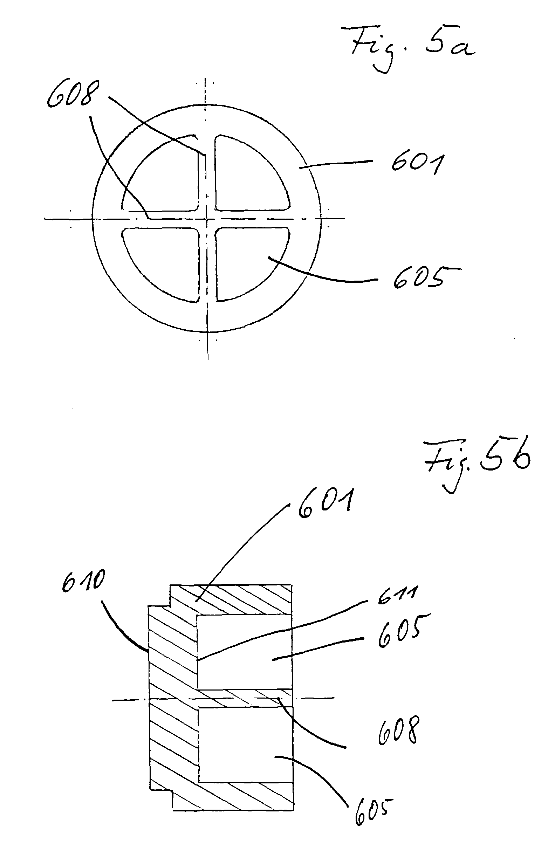

Figur 5a zeigt eine Draufsicht auf die dem Spinnrotor abgewandte Seite einer erfindungsgemäßen Lagerplatte 601. Der Luftkanal 605 besitzt zwei Stege 608, die für eine erhöhte radiale Stabilität des Luftkanals 605 sorgen, da sie radial wirkende Druckkräfte auf die Lagerplatte 601, z.B. bei deren Einbau, abstützen können. Die Stege 608 sind zueinander um 90° versetzt angeordnet, so daß sie den Kanalquerschnitt des Luftkanals 605 in vier gleich große Teile teilen. Die Stege 605 können dabei bis zum Ende des Luftkanals 605 in die Lagerplatte 601 hineinreichen. Vorteilhaft erstrecken sie sich aber nur auf einen axialen Teilbereich des Luftkanals 605 im Bereich seines Anfangs, der von der Lauffläche abgewandt ist. Es wird dadurch erreicht, daß die Luft die gesamte Rückseite der Lauffläche 610 (siehe z.B. Fig. 3b) beaufschlagen kann, womit ein gleichmäßiger Luftaustritt aus der Lauffläche erreicht wird. Ein derart ausgebildeter Steg bzw. Stege können beispielsweise auch in die Kanalplatte eingesetzt sein.

Figur 5b zeigt eine Seitenansicht einer Lagerplatte 601, ähnlich der von Figur 5a im Schnitt. Die Lagerplatte 601 besitzt in ihrem Luftkanal 605, anders als bei der Ausführung von Figur 5a, nur einen Steg, der den Luftkanal 605 somit in zwei gleiche Teile teilt. Der Steg 608 reicht axial in den Luftkanal 605 bis zur Rückseite 611 der Lauffläche 610 der Lagerplatte 601 heran. Der vom Steg abgedeckte Bereich der Rückseite 611 der Lauffläche 610 ist relativ zur Gesamtfläche so klein, daß kein wesentlicher Einfluß auf die Durchlässigkeit der Lagerplatte 601 für die vom Luftkanal 605 herangeführten Luft besteht.

## Patentansprüche

1. Offenend-Spinnvorrichtung mit einem Spinnrotor, auf den eine axial wirkende Kraft ausgeübt wird, mit einem aerostatischen Axiallager, an dem sich der Spinnrotor abstützt, wobei die Lagerplatte des Axiallagers aus einem permeablen Werkstoff besteht, durch den Luft in den Lagerspalt zwischen Lagerplatte und Spinnrotor gelangt, dadurch gekennzeichnet, daß die Lagerplatte (601) auf der dem Spinnrotor (1) abgewandten Seite wenigstens einen Luftkanal (605) enthält, der mit der vom Spinnrotor (1) abgewandten Seite mit der Druckluftzuleitung in Verbindung steht, und mit seinem Ende in die Lagerplatte (601) hineinreicht, mit einem Abstand von 0,5 mm bis 4 mm bis hin zur Lagerfläche (601).

2. Offenend-Spinnvorrichtung nach Anspruch 1, dadurch gekennzeichnet, daß wenigstens drei Luftkanäle (605) vorgesehen sind.

3. Offenend-Spinnvorrichtung nach Anspruch 1 oder 2, dadurch gekennzeichnet, daß ein Luftkanal (605) zwischen 1,5 mm und 4 mm im Durchmesser hat.

4. Offenend-Spinnvorrichtung nach einem oder mehreren der Ansprüche 1 bis 3, dadurch gekennzeichnet, daß ein Luftkanal (605) eine Länge zwischen 0,5 mm und 5 mm besitzen.

5. Offenend-Spinnvorrichtung nach einem oder mehreren der Ansprüche 1 bis 4, dadurch gekennzeichnet, daß bei mehreren Luftkanälen (605) diese symmetrisch in der Lagerplatte (601) angeordnet sind.

6. Offenend-Spinnvorrichtung nach einem oder mehreren der Ansprüche 1 bis 5, dadurch gekennzeichnet, daß die Luftkanäle (605) auf einer Kreislinie um die Drehachse des Spinnrotors (1) angeordnet sind.

7. Offenend-Spinnvorrichtung nach einem oder mehreren der Ansprüche 1 bis 6, dadurch gekennzeichnet, daß im Luftkanal (605) wenigstens ein Steg (608) angebracht ist.

## Claims

1. Open-end spinning device with a spinning rotor, on which an axially acting force is exerted with an aerostatic axial bearing on which the spinning rotor is supported, whereby the bearing plate of the axial bearing is made of a permeable material through which air escapes into the bearing gap between bearing plate and spinning rotor, **characterised in that** the bearing plate (601) contains at least one air channel (605) on the side away from the spinning rotor (1), said air channel being connected to the compressed-air supply line on its side away from the spinning rotor (1) and reaching into the bearing plate (601) with its end, this at a distance of 0,5 mm to 4 mm from the bearing surface (601).

2. Open-end spinning device according to claim 1, **characterised in that** at least three air channels (605) are comprised.

3. Open-end spinning device according to claim 1 or 2, **characterised in that** an air channel (605) has a diameter from 1,5 mm to 4 mm.

4. Open-end spinning device according to one or several of the claims 1 to 3, **characterised in that** an air channel (605) has a length from 0,5 mm to 5mm.

5. Open-end spinning device according to one or several of the claims 1 to 4, **characterised in that** if several air channels (605) are provided, these are located in a symmetric pattern in the bearing plate (601).

6. An open-end spinning device according to one or several of the claims 1 to 5, **characterised in that** the air channels (605) are arranged on a circular line around an axis of rotation of the spinning rotor (1).

7. Open-end spinning device according to one or several of the claims 1 to 6, **characterised in that** at least one ridge (608) is comprised in the air channel (605).

## Revendications

1. Dispositif de filature à fibres libérées comprenant un rotor à filer sur lequel est exercé une force agissant de façon axiale, avec un palier axial aérostatique sur lequel le rotor à filer prend appui, la plaque d'appui du palier axial consistant en un matériau perméable à travers lequel de l'air arrive dans la fente du palier entre la plaque d'appui et le rotor à filer, caractérisé en ce que la plaque d'appui (601) comprend au moins un canal d'air (605) sur le côté opposé au rotor à filer (1) qui, avec le côté opposé au rotor à filer (1), est en connexion avec l'amenée d'air comprimé, et dont l'extrémité s'étend dans la plaque d'appui (601) avec une distance de 0,5 mm à 4 mm par rapport à la surface d'appui (601).

2. Dispositif de filature à fibres libérées selon la revendication 1, caractérisé en ce qu'au moins trois canaux d'air (605) sont prévus.

3. Dispositif de filature à fibres libérées selon la revendication 1 ou 2, caractérisé en ce qu'un canal d'air (605) présente un diamètre compris entre 1,5 mm et 4 mm.

4. Dispositif de filature à fibres libérées selon l'une ou plusieurs des revendications 1 à 3, caractérisé en ce que la longueur d'un canal d'air (605) est comprise entre 0,5 mm et 5 mm.

5. Dispositif de filature à fibres libérées selon l'une ou plusieurs des revendications 1 à 4, caractérisé en ce qu'en cas de plusieurs canaux d'air (605), ceux-ci sont disposés de façon symétrique dans la plaque d'appui (601).

6. Dispositif de filature à fibres libérées selon l'une ou plusieurs des revendications 1 à 5, caractérisé en ce que les canaux d'air (605) sont disposés sur un cercle autour de l'axe de rotation du rotor à filer (1).

7. Dispositif de filature à fibres libérées selon l'une ou plusieurs des revendications 1 à 6, caractérisé en ce que dans le canal d'air (605) au moins une âme (608) est disposée.
